# EUROPÄISCHE PATENTSCHRIFT

(11) **EP 1 544 575 B1**
(45) Veröffentlichungstag und Bekanntmachung des Hinweises auf die Patenterteilung: **28.11.2007**
(21) Anmeldenummer: 03029070.4
(22) Anmeldetag: 17.12.2003
(51) Int. Cl.: G01C 21/36

(54) **Kraftfahrzeug-Navigationsvorrichtung mit programmierbarer automatischer Ansagebetriebsart**
Motor vehicle navigation device with programmable automatic announcement mode
Dispositif de navigation pour véhicule automobile à mode d'annonce automatique programmable

(43) Veröffentlichungstag der Anmeldung: 22.06.2005
(73) Patentinhaber: Delphi Technologies, Inc., Troy, MI 48098 (US)
(72) Erfinder: Ruschkowski, Jürgen, 90419 Nürnberg (DE)
(74) Vertreter: Manitz, Finsterwald & Partner GbR

(56) Entgegenhaltungen:
- US-A- 5 177 685
- PATENT ABSTRACTS OF JAPAN vol. 2000, no. 19, 5. Juni 2001 (2001-06-05) -& JP 2001 052295 A (FUJITSU TEN LTD), 23. Februar 2001 (2001-02-23)

## Beschreibung

Die Erfindung betrifft eine Kraftfahrzeug-Navigationsvorrichtung.

Bekannte Kraftfahrzeug-Navigationsvorrichtungen weisen einen Navigationsrechner, einen Speicher für Landkartendaten und ein Display zur Anzeige von Navigationsdaten auf. Weiterhin sind sie mit einer Bedientastatur versehen, mittels welcher das Fahrtziel in Form von alphanumerischen Zieldaten eingegeben werden kann. Navigationsdaten können auch akustisch über Lautsprecher wiedergegeben werden.

Aus der DE 34 45 668 C1 ist eine Steuervorrichtung für ein Fahrzeug-Zielführungssystem bekannt. Dabei erfolgt eine Eingabe des Fahrtzieles mittels eines transportablen Handgerätes, welches Eingabetasten, ein Display, einen Rechner und einen Straßenkartenspeicherchip aufweist. Mittels dieses Handgerätes können Daten fahrzeugunabhängig eingegeben werden. Zu Fahrtbeginn wird das Handgerät in eine Aussparung des Armaturenbrettes des Fahrzeugs eingesetzt.

Aus der EP 1 080 975 A2 sind ein Verfahren und eine Vorrichtung zur Darstellung von fahrer- oder fahrtrelevanten Informationen bekannt. Diese Darstellung erfolgt auf einem Display derart, dass die Gesamtlebensdauer einer Komponente oder der Gesamtinhalt einer Betriebsflüssigkeit oder die Gesamtheit eines Serviceintervalls oder die Gesamtlänge einer Route als graphisches Element bestimmter Länge dargestellt wird. Weiterhin wird an demselben graphischen Element die aktuelle abgelaufene Zeit oder die verlorene oder enthaltene Flüssigkeit oder die verbleiverbleibende Zeit bis zur nächsten Inspektion oder die zurückgelegte oder noch verbleibende Fahrtstrecke veranschaulicht.

Aus der DE 100 59 746 A1 ist ein computerunterstütztes Reiseroutenplanungs- und Reiseroutenführungssystem bekannt, welches dynamische Veränderungen sowohl der Verkehrssituation als auch Änderungen von Terminen des Fahrers berücksichtigt. Dieses bekannte System weist auch einen personalisierten Info-Push-Dienst auf. Dabei gibt der Benutzer ein persönliches Interessenprofil ein. Während der Fahrt zum Zielort gibt das bekannte System dem Fahrer automatisch und zeitgerecht Hinweise auf dem persönlichen Interessenprofil entsprechende Objekte, die entlang der Fahrtroute liegen.

Aus der JP 2001 052295 A ist eine Fahrzeugnavigationsvorrichtung mit einem Mikrocomputer bekannt, dem von einem GPS-Empfänger Positionsdaten zur Verfügung gestellt werden. Über eine Eingabeeinheit oder eine Fernbedienung kann der Fahrer eine Fahrtzielangabe eingeben. Zudem ist eine Sprachausgabeeinrichtung mit einem Lautsprecher vorgesehen, über die ein Ansagetext ausgegeben werden kann. Der Ansagetext wird mit Hilfe einer Sprachsyntheseeinrichtung synthetisiert oder von einem Speichermedium abgespielt. In einem automatischen Ansagemodus wird die Ansage beispielsweise in regelmäßigen Zeitabständen wiederholt.

Der Erfindung liegt die Aufgabe zugrunde, eine Kraftfahrzeug-Navigationsvorrichtung anzugeben, bei welcher die Information des Fahrers verbessert ist.

Diese Aufgabe wird durch eine Kraftfahrzeug-Navigationsvorrichtung mit den im Anspruch 1 angegebenen Merkmalen gelöst. Vorteilhafte Ausgestaltungen und Weiterbildungen der Erfindung sind in den abhängigen Ansprüchen 2 - 16 angegeben.

Die Vorteile der Erfindung bestehen insbesondere darin, dass der Fahrer des Kraftfahrzeugs in vorgegebenen Zeitabständen oder nach dem Zurücklegen vorgegebener Fahrtstreckenintervalle automatisch mittels eines Ansagetextes über ihn interessierende Themen informiert wird. Diese automatische Information erfolgt unabhängig vom Auftreten aktueller Verkehrsmeldungen.

Die genannten Zeitabstände und Fahrtstreckenintervalle sind vorzugsweise bereits vom Hersteller der Navigationsvorrichtung vorgegeben und in einem Speicher des Gerätes hinterlegt. In vorteilhafter Weise sind diese vorprogrammierten Zeitabstände und Fahrtstreckenintervalle aber vom Benutzer unter Verwendung einer Eingabeeinheit änderbar bzw. umprogrammierbar. Der Fahrer hat somit die Möglichkeit, die Häufigkeit der Ansage dieser ihm automatisch angebotenen Informationen nach seinen individuellen Vorstellungen festzulegen.

Erfindungsgemäß wird die automatische Ansagebetriebsart gemäß der Erfindung vom Prozessor des Gerätes erst dann freigeschaltet, wenn die errechnete Fahrtstrecke bis zum Fahrtziel oder die errechnete Fahrtzeit bis zum Fahrtziel größer ist als ein vorgegebener Schwellenwert. Dieser Schwellenwert liegt beispielsweise bei einer Stunde Fahrtzeit oder bei einer Fahrtstrecke von 100 Kilometern. Durch diese Maßnahme wird erreicht, dass bei Kurzstreckenfahrten oder Fahrten in größeren Städten eine automatische Ansage unterbleibt, da sie bei derartigen Fahrten oftmals unerwünscht ist.

Eine Kraftfahrzeug-Navigationsvorrichtung mit den im Anspruch 5 angegebenen Merkmalen hat den Vorteil, dass der Fahrer selbst entscheiden kann, welche Informationen ihm im Rahmen der automatische Ansage präsentiert werden. Beispielsweise hat er die Möglichkeit, sich ausschließlich die bis zum Fahrtziel prognostizierte Restfahrzeit ansagen zu lassen. Alternativ dazu kann er sich die bis zum Fahrtziel prognostizierte Restfahrzeit und die restliche Fahrstrecke bis zum Fahrtziel ansagen lassen. Bei diesen Daten handelt es sich um die Navigation betreffende Daten. Eine weitere Alternative besteht darin, dass er sich von einer Fahrtdatenquelle abgeleitete Fahrzeugbetriebsangaben alleine oder zusammen mit die Navigation betreffenden Daten ansagen lässt. Zu den von einer Fahrtdatenquelle abgeleiteten Fahrzeugbetriebsangaben gehören beispielsweise die momentane Fahrtgeschwindigkeit und der momentane Kraftstoffverbrauch. Eine weitere Alternative besteht darin, dass sich der Fahrer von einer Sensoreinheit abgeleitete Daten alleine oder zusammen mit den vorstehend genannten Daten ansagen lässt. Zu den von der Sensoreinheit abgeleiteten Daten gehört beispielsweise die momentane Außentemperatur. Ein weiterer Bestandteil der automatische Ansage kann eine Verkehrsnachricht sein, die vom Rundfunkempfangsteil empfangen und in einem Verkehrsnachrichtenspeicher des Gerätes zwischengespeichert wurde. Ferner kann ein Bestandteil des Ansagetextes auf Daten beruhen, die von einer Service-Zentrale zur Verfügung gestellt und ebenfalls in einem Speicher des Gerätes zwischengespeichert wurden. Beispielsweise kann es sich bei den von der Servicezentrale gelieferten Daten um den für den Zielort gültigen aktuellen Wetterbericht handeln. Der Fahrer hat - wie bereits ausgeführt - die Möglichkeit, im Sinne eines Programmiervorganges festzulegen, welche der vorgenannten Bestandteile dem über die Lautsprecher automatisch wiedergegebenen Ansagetext angehören sollen und welche nicht.

Eine vorteilhafte Weiterbildung der Erfindung - wie sie Gegenstand der Ansprüche 13 bis 15 ist - besteht darin, den Ansagetext nicht nur über die Lautsprecher des Kraftfahrzeugs wiederzugeben, sondern zusätzlich auch in visueller Form auf dem Display der Navigationsvorrichtung darzustellen. Dies kann in Form einer Standbilddarstellung oder auch in Form einer Laufschrift erfolgen.

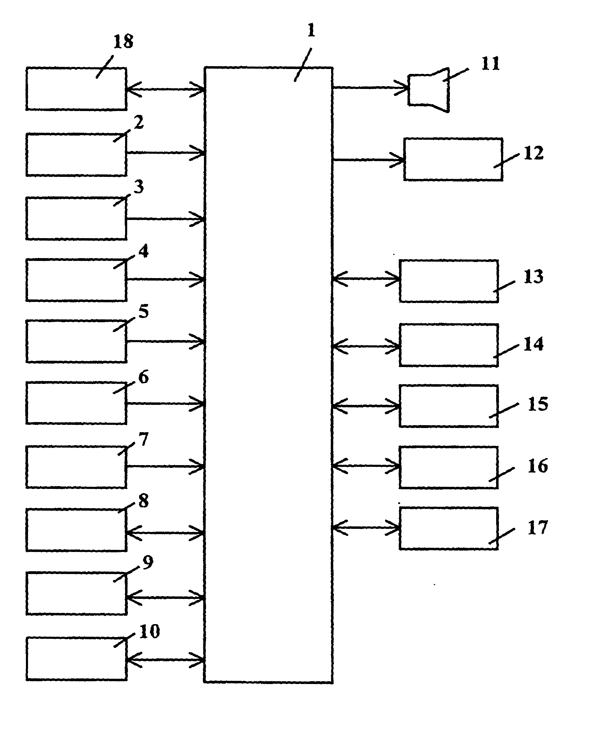

Weitere vorteilhafte Eigenschaften der Erfindung ergeben sich aus der nachfolgenden Erläuterung eines Ausführungsbeispiels anhand der Figur. Diese zeigt ein Blockschaltbild einer Kraftfahrzeug-Navigationsvorrichtung gemäß der Erfindung.

Die dargestellte Vorrichtung weist als zentrale Steuer- und Recheneinheit einen Mikroprozessor 1 auf, dessen Arbeitsprogramm in einem nichtflüchtigen Speicher 13 hinterlegt ist. Der Mikroprozessor 1 dient beim gezeigten Ausführungsbeispiel unter anderem als Navigationsrechner, der aus ihm zugeführten Signalen Navigationsdaten ermittelt und dem Fahrer des Kraftfahrzeugs in akustischer Form über einen Lautsprecher 11 und/oder in visueller Form über ein Display 12 zur Verfügung stellt.

Die Eingabe des Fahrtzieles erfolgt unter Verwendung einer Eingabeeinheit, bei der es sich um ein Bedienteil 8, ein Telefon 9 oder einen PDA 10 handeln kann. Bezüglich des Fahrtziels wird beispielsweise in alphanumerischer Form die Straße, die Hausnummer, die Postleitzahl und der Name des Zielortes eingegeben.

Weiterhin ist der Prozessor 1 mit einem GPS-Empfangsteil 3 verbunden, welches dem Prozessor Positionsdaten übermittelt, die der gegenwärtigen Position des Fahrzeugs entsprechen. Aus diesen Positionsdaten, dem eingegebenen Fahrtziel und Landkartendaten, die in einem Landkartenspeicher 6 abgespeichert sind, ermittelt der Prozessor 1 die Navigations- bzw. Fahrtroutendaten, die dem Fahrer auf der Fahrt zu seinem Zielort in akustischer und visueller Form übermittelt werden. Diese Fahrtroutendaten werden in einem Speicher 15 zwischengespeichert und während der Fahrt bei Bedarf aktualisiert.

Die akustische Wiedergabe von Fahrtroutendaten erfolgt unter Verwendung von Sprachbausteinen, die bereits werkseitig in einem Speicher 14 hinterlegt wurden. Die im Speicher 14 hinterlegten Sprachbausteine werden auch in einer automatischen Ansagebetriebsart verwendet, die unten noch näher erläutert wird.

Ferner ist der Mikroprozessor 1 mit einem Rundfunkempfangsteil 2, einer Sensoreinheit 4, einer Uhr 5, einer Fahrtdatenquelle 7 und einer Service-Zentrale 18 verbunden.

Mittels des Rundfunkempfangsteil 2 werden Verkehrsnachrichten empfangen und an den Mikroprozessor 1 weitergeleitet. Dieser sorgt bei Bedarf für eine Unterbrechung des laufenden Programmes, beispielsweise einer Musikwiedergabe von einem Kassettenteil oder einem CD-Abspielteil, und eine verzögerungsfreie Wiedergabe der jeweiligen Verkehrsnachricht über den Lautsprecher 11. Weiterhin berücksichtigt der Mikroprozessor 1 die Verkehrsnachrichten bei der Planung der Restroute bis zum Fahrtziel und ändert ggf. die bisher gültigen Routendaten ab, um beispielsweise einen gemeldeten Verkehrsstau zu umfahren.

Die Sensoreinheit 4 dient zur Erfassung von Umweltdaten und weist einen Temperatursensor auf, der zur Erfassung der Außentemperatur des Fahrzeugs vorgesehen ist. Die von der Sensoreinheit 4 zur Verfügung gestellten Umweltdaten können bei der Ermittlung der Restfahrzeit bis zum Fahrtziel berücksichtigt werden. Es besteht aber auch die Möglichkeit, diese Umweltdaten lediglich zur Information des Fahrers im Rahmen der automatischen Ansagebetriebsart zu verwenden. Weitere Umweltdaten, die von der Sensoreinheit 4 ermittelt und dem Mikroprozessor 1 zur weiteren Verwendung zugeleitet werden, sind beispielsweise die Umgebungshelligkeit, die Luftfeuchtigkeit der Außenluft des Fahrzeugs und Daten, die den Zustand der Fahrbahn beschreiben.

Die von der Uhr 5 abgeleitete Echtzeitinformation wird vom Mikroprozessor 1 verwendet, um die voraussichtliche Fahrtzeit bis zum Fahrtziel und die voraussichtliche Ankunftszeit am Fahrtziel zu ermitteln und um den Fahrer im Rahmen der automatischen Ansagebetriebsart über die aktuelle Uhrzeit, die voraussichtliche Fahrtzeit bis zum Fahrtziel und die voraussichtliche Ankunftszeit am Fahrtziel zu informieren.

Die Fahrtdatenquelle 7 stellt dem Mikroprozessor 1 beispielsweise über den CAN-Bus des Fahrzeugs Informationen über die Betriebsparameter des Fahrzeugs zur Verfügung. Zu diesen Betriebsparametern gehören Angaben des momentanen Tankfüllungsstandes, der momentanen Fahrtgeschwindigkeit und der Motortemperatur. Der Mikroprozessor 1 verwendet diese Daten beispielsweise dazu, den Fahrer über den Lautsprecher 11 auf einen nötigen Tankstopp hinzuweisen oder den Fahrer über den Lautsprecher 11 bei zu hoher Motortemperatur dazu aufzufordern, langsamer zu fahren, so dass die Motortemperatur wieder absinken kann. Weiterhin werden diese Informationen über die Betriebsparameter des Fahrzeugs auch dazu verwendet, den Fahrer im Rahmen der automatischen Ansagebetriebsart über die Betriebsparameter des Fahrzeugs zu informieren.

Weiterhin erhält der Mikroprozessor 1 von der Servicezentrale 18 automatisch Informationen übermittelt, die vom Fahrer abonniert wurden. Bei diesen Informationen handelt es sich beispielsweise um Wetterberichte aus Städten, die entlang der geplanten Fahrtroute liegen, unter anderem auch um den Wetterbericht für den Zielort. Auch diese Informationen können vom Mikroprozessor 1 beim Navigationsvorgang berücksichtigt werden. Ferner werden sie auch dazu verwendet, den Fahrer im Rahmen der automatischen Ansagebetriebsart über ihn interessierende Dinge zu informieren.

Die über das Rundfunkempfangsteil 2 empfangenen Verkehrsnachrichten, die die vorgesehene Fahrtroute betreffen, werden auch bei abgestelltem Motor bzw. ausgeschaltetem Rundfunkempfangsteil 2 in einem Verkehrsnachrichtenspeicher 16 abgespeichert. Die dort hinterlegten Verkehrsnachrichten können vom Fahrer des Fahrzeugs bei Bedarf mittels der Bedieneinheit 8 abgerufen werden. Dies ist insbesondere von Vorteil nach einer Fahrtunterbrechung, während derer der Fahrer sich vorübergehend außerhalb des Fahrzeugs aufgehalten hat.

Der Speicher 17 ist dazu vorgesehen, alle Informationen abzuspeichern, die für die automatische Ansagebetriebsart in Frage kommen. Zu diesen Informationen gehören die Navigation betreffende Daten, beispielsweise Angaben über die bisher zurückgelegte Strecke, die bisherige Fahrtzeit, die noch zurückzulegende Strecke und die bis zum Fahrtziel noch erforderliche Fahrtzeit. Weiterhin gehören zu diesen Informationen die von der Fahrtdatenquelle 7 zur Verfügung gestellten Betriebsparameter des Fahrzeugs, die von der Sensoreinheit 4 abgeleiteten Umweltdaten, die im Speicher 16 zwischengespeicherten Verkehrsnachrichten sowie diejenigen Daten, die von der Servicezentrale 18 geliefert wurden.

Bei der automatische Ansagebetriebsart gemäß der Erfindung handelt es sich um einen Ansagebetrieb, der während der Fahrt vom Mikroprozessor 1 in vorgegebenen Zeitabständen nach dem Fahrtbeginn oder nach dem Zurücklegen vorgegebener Fahrtstreckenintervalle automatisch initiiert wird. Die vorgegebenen Zeitabstände betragen beispielsweise 30 Minuten, so dass dem Fahrer während einer längeren Autofahrt automatisch alle 30 Minuten eine Ansage mit den im vorhergehenden Absatz angegebenen Textbestandteilen über den Lautsprecher 11 präsentiert wird. Erfolgt die automatische Ansage nach dem Zurücklegen vorgegebener Fahrtstreckenintervalle, dann kann dieses Fahrtstreckenintervall beispielsweise 50 km betragen.

Erfindungsgemäß wird der automatische Ansagebetrieb durch den Mikroprozessor 1 erst dann freigegeben, wenn die zwischen dem Startpunkt und dem Fahrtziel zurückzulegende Fahrtstrecke oder die errechnete Fahrtzeit größer ist als ein vorgegebener Schwellenwert. Dieser Schwellenwert liegt beispielsweise bei einer Fahrtstrecke von 100 Kilometern bzw. einer Fahrtzeit von einer Stunde. Durch diese Weiterbildung wird in vorteilhafter Weise erreicht, dass im Kurzstreckenbetrieb, beispielsweise bei einer Fahrt in einer größeren Stadt, die automatische Ansage unterbleibt, da sie bei derartigen Fahrten in der Regel unerwünscht ist.

Das vorgegebene Fahrtstreckenintervall, die vorgegebenen Zeitabstände und die genannten Schwellenwerte sind bereits vom Hersteller vorgegeben und werden bei der Fertigung im Werk im Speicher 17 hinterlegt. Der Benutzer hat jedoch in vorteilhafter Weise die Möglichkeit, alle diese Werte unter Verwendung der Eingabeeinheit, insbesondere des Bedienteils 8 und des PDA's 10, umzuprogrammieren und dabei Einfluss auf die Häufigkeit der automatischen Ansagen während des Fahrtbetriebes zu nehmen.

Weiterhin hat der Benutzer die Möglichkeit, durch eine Programmierung mittels der Eingabeeinheit, insbesondere des Bedienteils 8 und des PDA's 10, die Bestandteile des Ansagetextes festzulegen. Bei dieser Programmierung kann er gezielt einzelne Informationen aus jedem der oben genannten Ansagebestandteile für die automatische Ansage auswählen oder von dieser ausschließen. Eine automatische Ansage kann beispielsweise wie folgt lauten:
"ES IST JETZT 15 UHR. BIS ZU IHREM FAHRTZIEL SIND ES NOCH 100 KILOMETER. DIE VORAUSSICHTLICHE RESTFAHRZEIT BETRÄGT 1 STUNDE. IHRE MOMENTANE FAHRTGESCHWINDIGKEIT BETRÄGT 120 KILOMETER PRO STUNDE. STAUMELDUNGEN AUF IHRER STRECKE LIEGEN NICHT VOR. DIE MOMENTANE AUSSEN-TEMPERATUR BETRÄGT 12° CELSIUS".

Eine alternative automatische Ansage lautet wie folgt:
"BIS ZU IHREM FAHRTZIEL SIND ES NOCH 100 KILOMETER. SIE WERDEN DORT VORAUSSICHTLICH UM 16 UHR ANKOMMEN".

Eine vorteilhafte Weiterbildung der Erfindung besteht darin, diejenigen Informationen, die der Benutzer für die automatische Ansagebetriebsart ausgewählt hat, unter Steuerung durch den Mikroprozessor 1 auch in visueller Form auf dem Display 12 anzuzeigen. Dies kann in Form einer Laufschrift geschehen, die sich beispielsweise nur über den unteren Bereich des Displays erstreckt. Dies kann alternativ dazu auch in Form einer Standbilddarstellung geschehen, die für eine vorgegebene Zeitdauer, beispielsweise 20 Sekunden, auf dem Display angezeigt wird.

Gemäß einer anderen Ausführungsform der Erfindung können die dem Ansagetext entsprechenden Informationen auch ausschließlich visuell auf dem Display 12 angezeigt werden. Der Beginn dieser Anzeige auf dem Display 12 kann - um den Fahrer auf die Anzeige aufmerksam zu machen - von einem akustischen Signalton begleitet sein, der über den Lautsprecher 11 wiedergegeben wird.

Der Mikroprozessor 1 ist vorzugsweise derart programmiert, dass er in dem Fall, dass eine automatische Ansage gemäß der Erfindung mit einer aktuellen Verkehrsmeldung zeitlich kollidiert, der aktuellen Verkehrsmeldung Vorrang einräumt.

Nach alledem wird gemäß der vorliegenden Erfindung der Fahrer eines Kraftfahrzeugs während einer längeren Fahrt zu einem gewünschten Zielort in regelmäßigen Zeit- oder Streckenabständen automatisch mittels eines Ansagetextes mit Informationen versorgt. Der Fahrer kann in vorteilhafter Weise die Zeit- oder Streckenabstände durch einen Programmiervorgang nach seinen individuellen Wünschen gestalten. Weiterhin kann er auch selbst festlegen, welche Informationen ihm im Rahmen der automatischen Ansagebetriebsart präsentiert werden.

Eine andere Ausführungsform der Erfindung besteht darin, den Ansagetext in zwei Gruppen aufzuteilen. Eine dieser Gruppen umfasst Daten, die für den Fahrer selbst wichtig sind und das Führen des Fahrzeugs betreffen. Dazu gehören insbesondere Daten, die die Navigation des Fahrzeugs betreffen. Die andere Gruppe umfasst Daten, die überwiegend informativen Charakter haben und insbesondere für die weiteren Passagiere des Fahrzeugs bestimmt sind. Handelt es sich bei dem Kraftfahrzeug beispielsweise um einen Reisebus, dann werden die der ersten Gruppe angehörenden Daten ausschließlich dem Fahrer präsentiert und die der zweiten Gruppe angehörenden Daten ausschließlich auf Displays im Fahrgastraum dargestellt. Daten der zweiten Gruppe sind beispielsweise Informationen über Städte, die entlang der Reiseroute liegen. Diese Informationen werden von der Servicezentrale 18 zur Verfügung gestellt und bis zu ihrer Wiedergabe im Speicher 17 zwischengespeichert.

### Bezugszeichenliste:

- 1: Prozessor
- 2: Rundfunkempfangsteil
- 3: GPS-Empfangsteil
- 4: Sensoreinheit
- 5: Uhr
- 6: Landkartenspeicher
- 7: Fahrtdatenquelle
- 8: Bedienteil
- 9: Telefon
- 10: PDA
- 11: Lautsprecher
- 12: Display
- 13: Speicher für Arbeitsprogramm des Prozessors
- 14: Speicher für Sprachbausteine
- 15: Speicher für Navigationsdaten
- 16: Speicher für Verkehrsnachrichten
- 17: Speicher für Daten der automatischen Ansagebetriebsart
- 18: Servicezentrale

## Patentansprüche

1. Kraftfahrzeug-Navigationsvorrichtung, welche aufweist:
- einen Prozessor (1),
- einen mit dem Prozessor (1) verbundenen Rundfunkempfangsteil (2), welcher dem Prozessor Verkehrsnachrichtensignale bereitstellt,
- einen mit dem Prozessor (1) verbundenen GPS-Empfangsteil (3), welcher dem Prozessor Positionsdaten bereitstellt,
- eine mit dem Prozessor (1) verbundene Eingabeeinheit (8, 9, 10), welche zur Eingabe von Fahrtzielangaben vorgesehen ist, und
- einen Lautsprecher (11), der zur akustischen Wiedergabe eines Ansagetextes vorgesehen ist,
wobei die Kraftfahrzeug-Navigationsvorrichtung eine automatische Ansagebetriebsart aufweist, bei welcher der Prozessor (1) in vorgegebenen Zeitabständen oder nach dem Zurücklegen vorgegebener Fahrtstreckenintervalle automatisch die Wiedergabe des Ansagetextes über den Lautsprecher (11) initiiert, und der Prozessor (1) die automatische Wiedergabe des Ansagetextes nur dann freigibt, wenn die bis zum Fahrtziel zurückzulegende Fahrtstrecke oder die errechnete Fahrtzeit größer als ein vorgegebener Schwellenwert ist.

2. Kraftfahrzeug-Navigationsvorrichtung nach Anspruch 1,
**dadurch gekennzeichnet, dass**
sie einen Speicher (17) zur Abspeicherung der den vorgegebenen Zeitabständen oder den vorgegebenen Zeitstreckenintervallen entsprechenden Daten aufweist.

3. Kraftfahrzeug-Navigationsvorrichtung nach Anspruch 2,
**dadurch gekennzeichnet, dass**
die den vorgegebenen Zeitabständen oder Fahrtstreckenintervallen entsprechenden Daten werkseitig vorprogrammiert sind.

4. Kraftfahrzeug-Navigationsvorrichtung nach Anspruch 2 oder 3,
**dadurch gekennzeichnet, dass**
die Eingabeeinheit (8, 9, 10) zur Veränderung der vorgegebenen Zeitabstände oder der vorgegebenen Fahrtstreckenintervalle vorgesehen ist.

5. Kraftfahrzeug-Navigationsvorrichtung nach einem der vorhergehenden Ansprüche,
**dadurch gekennzeichnet, dass**
die Eingabeeinheit (8, 9, 10) zur Auswahl der Bestandteile des Ansagetextes vorgesehen ist.

6. Kraftfahrzeug-Navigationsvorrichtung nach Anspruch 5,
**dadurch gekennzeichnet, dass**
der Speicher (17) einen Speicherteil aufweist, der zur Abspeicherung von Informationen über die ausgewählten Bestandteile des Ansagetextes vorgesehen ist.

7. Kraftfahrzeug-Navigationsvorrichtung nach einem der vorhergehenden Ansprüche,
**dadurch gekennzeichnet, dass**
ein Bestandteil des Ansagetextes die Navigation betreffende Daten sind.

8. Kraftfahrzeug-Navigationsvorrichtung nach einem der vorhergehenden Ansprüche,
**dadurch gekennzeichnet, dass**
ein Bestandteil des Ansagetextes von einer Fahrtdatenquelle (7) abgeleitete Informationen über Fahrzeugbetriebsparameter sind.

9. Kraftfahrzeug-Navigationsvorrichtung nach einem der vorhergehenden Ansprüche,
**dadurch gekennzeichnet, dass**
ein Bestandteil des Ansagetextes auf Daten beruht, die von einer Sensoreinheit (4) abgeleitet sind.

10. Kraftfahrzeug-Navigationsvorrichtung nach Anspruch 9,
**dadurch gekennzeichnet, dass**
die Sensoreinheit (4) zur Erfassung mindestens eines Umweltparameters vorgesehen ist.

11. Kraftfahrzeug-Navigationsvorrichtung nach einem der vorhergehenden Ansprüche,
**dadurch gekennzeichnet, dass**
ein Bestandteil des Ansagetextes vom Rundfunkempfangsteil (2) empfangene und in einem Verkehrsnachrichtenspeicher (16) zwischengespeicherte Verkehrsnachrichten sind.

12. Kraftfahrzeug-Navigationsvorrichtung nach einem der vorhergehenden Ansprüche,
**dadurch gekennzeichnet, dass**
ein Bestandteil des Ansagetextes auf Daten beruht, die von einer Servicezentrale (18) zur Verfügung gestellt werden.

13. Kraftfahrzeug-Navigationsvorrichtung nach einem der vorhergehenden Ansprüche,
**dadurch gekennzeichnet, dass**
der Prozessor (1) eine automatische Wiedergabe des Ansagetextes in visueller Form auf dem Display (12) initiiert.

14. Kraftfahrzeug-Navigationsvorrichtung nach Anspruch 13,
**dadurch gekennzeichnet, dass**
die Wiedergabe des Ansagetextes in visueller Form als Laufschrift erfolgt.

15. Kraftfahrzeug-Navigationsvorrichtung nach Anspruch 13,
**dadurch gekennzeichnet, dass**
die Wiedergabe des Ansagetextes in visueller Form als Standbilddarstellung erfolgt.

16. Kraftfahrzeug-Navigationsvorrichtung nach einem der vorhergehenden Ansprüche,
**dadurch gekennzeichnet, dass**
der Ansagetext in zwei Gruppen aufgeteilt ist und der ersten Gruppe zugehörige Informationen dem Fahrer des Kraftfahrzeugs und der zweiten Gruppe zugehörige Informationen den weiteren Passagieren des Kraftfahrzeugs präsentiert werden.

## Claims

1. A motor vehicle navigation apparatus comprising:
- a processor (1);
- a radio receiver part (2) connected to the processor (1) and providing traffic message signals to the processor;
- a GPS receiver part (3) connected to the processor (1) and providing positional data to the processor;
- an input unit (8, 9, 10) connected to the processor (1) and provided for the input of journey destination data; and
- a loudspeaker (11) provided for the acoustic output of an announcement text,
wherein the motor vehicle navigation apparatus has an automatic announcement operating mode in which the processor (1) automatically initiates the output of the announcement text via the loudspeaker (11) at regular time intervals or after covering set travel distance intervals and the processor (1) only releases the automatic output of the announcement text when the travel distance covered up to the journey destination or the calculated travel time is larger than a predetermined threshold value.

2. A motor vehicle navigation apparatus in accordance with claim 1, **characterized in that** it has a memory (17) for the storage of the set time intervals or of data corresponding to the set travel distance intervals.

3. A motor vehicle navigation apparatus in accordance with claim 2, **characterized in that** the data corresponding to the set time intervals or travel distance intervals are pre-programmed ex works.

4. A motor vehicle navigation apparatus in accordance with claim 2 or claim 3, **characterized in that** the input unit (8, 9, 10) is provided for the changing of the set time intervals or of the set travel distance intervals.

5. A motor vehicle navigation apparatus in accordance with any one of the preceding claims, **characterized in that** the input unit (8, 9, 10) is provided for the selection of the components of the announcement text.

6. A motor vehicle navigation apparatus in accordance with claim 5, **characterized in that** the memory (17) has a memory part which is provided for the storage of information on the selected components of the announcement text.

7. A motor vehicle navigation apparatus in accordance with any one of the preceding claims, **characterized in that** data relating to the navigation are a component of the announcement text.

8. A motor vehicle navigation apparatus in accordance with any one of the preceding claims, **characterized in that** information on motor vehicle operating parameters derived from a travel data source (7) is a component of the announcement text.

9. A motor vehicle navigation apparatus in accordance with any one of the preceding claims, **characterized in that** a component of the announcement text is based on data which are derived from a sensor unit (4).

10. A motor vehicle navigation apparatus in accordance with claim 9, **characterized in that** the sensor unit (4) is provided for the sensing of at least one environmental parameter.

11. A motor vehicle navigation apparatus in accordance with any one of the preceding claims, **characterized in that** traffic messages received by the radio receiver part (2) and temporarily stored in a traffic message memory (16) are a component of the announcement text.

12. A motor vehicle navigation apparatus in accordance with any one of the preceding claims, **characterized in that** a component of the announcement text is based on data which are made available by a service center (18).

13. A motor vehicle navigation apparatus in accordance with any one of the preceding claims, **characterized in that** the processor (1) initiates an automatic output of the announcement text in visual form on the display (12).

14. A motor vehicle navigation apparatus in accordance with claim 13, **characterized in that** the output of the announcement text takes place in visual form as streaming text.

15. A motor vehicle navigation apparatus in accordance with claim 13, **characterized in that** the output of the announcement text takes place in visual form as a still picture representation.

16. A motor vehicle navigation apparatus in accordance with any one of the preceding claims, **characterized in that** the announcement text is divided into two groups and information belonging to the first group is presented to the driver of the motor vehicle and information belonging to the second group is presented to the further passengers of the motor vehicle.

## Revendications

1. Dispositif de navigation pour véhicule automobile, comprenant :
- un processeur (1),
- un élément récepteur radio (2) relié au processeur (1), fournissant des signaux d'informations de trafic au processeur,
- un élément récepteur GPS (3) relié au processeur (1), fournissant des données de position au processeur,
- une unité d'entrée (8, 9, 10) reliée au processeur (1), qui est prévue pour permettre la saisie d'indications de la destination, et
- un haut-parleur (11) qui est prévu pour la reproduction acoustique d'un texte d'annonce,
le dispositif de navigation pour véhicule offrant un mode de fonctionnement d'annonce automatique, dans lequel, à des intervalles de temps prédéterminés ou après le franchissement d'intervalles de distance prédéterminés, le processeur (1) lance automatiquement la reproduction du texte d'annonce via le haut-parleur (11), et le processeur (1) autorise la reproduction automatique du texte d'annonce uniquement si la distance à parcourir jusqu'au point de destination, ou le temps de parcours calculé jusqu'au point de destination, est supérieur(e) à une valeur seuil prédéterminée.

2. Dispositif de navigation pour véhicule automobile selon la revendication 1,
**caractérisé en ce qu'**il comprend une mémoire (17) permettant d'enregistrer les données correspondant aux intervalles de temps prédéterminés ou aux intervalles de distance prédéterminés.

3. Dispositif de navigation pour véhicule automobile selon la revendication 2,
**caractérisé en ce que** les données correspondant aux intervalles de temps prédéterminés ou aux intervalles de distance prédéterminés sont préprogrammées en usine.

4. Dispositif de navigation pour véhicule automobile selon la revendication 2 ou 3,
**caractérisé en ce que** l'unité d'entrée (8, 9, 10) est prévue pour permettre la modification des intervalles de temps prédéterminés ou des intervalles de distance prédéterminés.

5. Dispositif de navigation pour véhicule automobile selon l'une des revendications précédentes,
**caractérisé en ce que** l'unité d'entrée (8, 9, 10) est prévue pour permettre la sélection des composants du texte d'annonce.

6. Dispositif de navigation pour véhicule automobile selon la revendication 5,
**caractérisé en ce que** la mémoire (17) comprend un secteur mémoire qui est prévu pour enregistrer des informations concernant les composants sélectionnés du texte d'annonce.

7. Dispositif de navigation pour véhicule automobile selon l'une des revendications précédentes,
**caractérisé en ce qu'**un composant du texte d'annonce est constitué de données concernant la navigation.

8. Dispositif de navigation pour véhicule automobile selon l'une des revendications précédentes,
**caractérisé en ce qu'**un composant du texte d'annonce est constitué d'informations dérivées d'une source de données de conduite (7), concernant des paramètres de fonctionnement du véhicule.

9. Dispositif de navigation pour véhicule automobile selon l'une des revendications précédentes,
**caractérisé en ce qu'**un composant du texte d'annonce est basé sur des données qui sont dérivées d'une unité de capteurs (4).

10. Dispositif de navigation pour véhicule automobile selon la revendication 9,
**caractérisé en ce que** l'unité de capteurs (4) est prévue pour détecter au moins un paramètre environnemental.

11. Dispositif de navigation pour véhicule automobile selon l'une des revendications précédentes,
**caractérisé en ce qu'**un composant du texte d'annonce est constitué d'informations de trafic reçues par l'élément récepteur radio (2) et stockées temporairement dans une mémoire (16) d'informations de trafic.

12. Dispositif de navigation pour véhicule automobile selon l'une des revendications précédentes,
**caractérisé en ce qu'**un composant du texte d'annonce est basé sur des données qui sont mises à disposition par une centrale de service (18).

13. Dispositif de navigation pour véhicule automobile selon l'une des revendications précédentes,
**caractérisé en ce que** le processeur (1) lance une reproduction automatique du texte d'annonce sous une forme visuelle à l'écran d'affichage (12).

14. Dispositif de navigation pour véhicule automobile selon la revendication 13,
**caractérisé en ce que** la reproduction du texte d'annonce sous forme visuelle se fait sous forme d'un texte défilant.

15. Dispositif de navigation pour véhicule automobile selon la revendication 13,
**caractérisé en ce que** la reproduction du texte d'annonce sous forme visuelle se fait sous forme d'un affichage d'images statiques.

16. Dispositif de navigation pour véhicule automobile selon l'une des revendications précédentes,
**caractérisé en ce que** le texte d'annonce est divisé en deux groupes, et que des informations appartenant au premier groupe sont présentées au conducteur du véhicule automobile, et des informations appartenant au deuxième groupe sont présentées aux autres occupants du véhicule.
